# FASCICULE DE BREVET EUROPEEN

(11) **EP 3 421 357 B1**
(45) Date de publication et mention de la délivrance du brevet: **28.08.2019**
(21) Numéro de dépôt: 18173189.4
(22) Date de dépôt: 18.05.2018
(51) Int. Cl.: B64C 25/34, G01G 19/07, B64D 45/00, B64C 25/32

(54) **TRAIN D'ATTERRISSAGE MUNI D'UN DISPOSITIF EMBARQUÉ DE MESURE DE CHARGE POUR UN AERONEF, ET AERONEF**
FAHRWERK, DAS MIT EINEM INTEGRIERTEN LADUNGSMESSGERÄT FÜR EIN LUFTFAHRZEUG AUSGESTATTET IST, UND LUFTFAHRZEUG
LANDING GEAR PROVIDED WITH AN ON-BOARD DEVICE FOR MEASURING THE LOAD OF AN AIRCRAFT, AND AIRCRAFT

(30) Priorité: 26.06.2017 FR 1770674
(43) Date de publication de la demande: 02.01.2019
(73) Titulaire: Airbus Helicopters, 13725 Marignane Cedex (FR)
(72) Inventeur: BAILLY, Stéphane, 13480 Cabries (FR); SCHMIDT, Vincent, 13100 Aix en Provence (FR)
(74) Mandataire: GPI & Associés

(56) Documents cités:
- EP-A2- 0 482 289
- FR-A1- 2 564 582
- FR-A1- 2 875 598
- FR-A1- 2 986 322
- GB-A- 2 144 225
- US-A1- 2017 158 311

## Description

La présente invention concerne un train d'atterrissage muni d'un dispositif embarqué de mesure de charge pour un aéronef, et un aéronef tel que par exemple un giravion.

Des dispositifs embarqués sur un aéronef sont parfois implémentés pour obtenir une mesure précise de la charge d'un aéronef, afin par exemple de déterminer sa masse voire la position de son centre de gravité avant un vol.

Certains de ces dispositifs embarqués évaluent les déformations d'une partie d'un train d'atterrissage. Par exemple, des capteurs mesurent la déformation d'un organe déformable d'un train d'atterrissage à roue d'un aéronef pour en déduire la charge appliquée sur cette roue.

A titre illustratif, le document FR 2 875 598 présente un dispositif embarqué de ce type. Un barreau ayant à une extrémité un capteur à courant de Foucault est agencé dans une fusée de roue pour évaluer la déformation de cette fusée de roue.

Lorsque l'aéronef repose sur le sol, la fusée de roue tend à se déformer. L'amplitude de la déformation est fonction de la masse de l'aéronef. Dès lors, un capteur est utilisé pour évaluer cette déformation, et en déduire la masse de l'aéronef.

Le document EP 3121576 présente un dispositif embarqué muni de capteurs optiques.

Le document FR 1355098 est aussi connu.

Indépendamment de sa réalisation, un capteur d'un dispositif embarqué de mesure de charge est susceptible de subir des défaillances. Des opérations de maintenance peuvent être mises en place pour détecter des pannes. Par exemple, un opérateur teste le dispositif embarqué en utilisant des moyens de levage pour vérifier que le dispositif embarqué fournit des mesures correctes.

Le document FR 2986322 décrit un dispositif embarqué qui est notamment utilisé pour mesurer la masse d'un aéronef. Ce dispositif embarqué comporte un barreau agencé dans une fusée de roue. Une extrémité du barreau comporte un premier capteur réalisant une première mesure et un deuxième capteur réalisant une deuxième mesure. Un desdits capteurs est sollicité pour déterminer une information relative à une masse au travers de la déformation de la fusée. De plus, un moyen de traitement est relié au premier capteur et au deuxième capteur pour générer une alerte lorsqu'une somme de la première mesure et de la deuxième mesure n'est pas constante.

Le moyen de traitement tend ainsi à permettre une surveillance du dispositif embarqué sans mettre en place des opérations de maintenance lourdes.

Les documents FR 2564582, US 2017/158311, GB 2144225 et EP 0482289 sont aussi connus.

La présente invention vise un dispositif embarqué pour mesurer une charge au niveau d'un train d'atterrissage d'un aéronef, ledit dispositif embarqué ayant un système de test pour vérifier le fonctionnement de ce dispositif embarqué.

L'invention vise ainsi un train d'atterrissage destiné à un aéronef, par exemple un giravion. Ce train d'atterrissage est muni d'une jambe de train portant au moins une fusée. Cette fusée porte au moins un organe de contact. De plus, la fusée est munie d'un élément creux. Le train d'atterrissage comprend un dispositif embarqué, ce dispositif embarqué comportant un barreau s'étendant à l'intérieur dudit élément creux d'une extrémité de fixation vers une extrémité libre. L'extrémité de fixation peut être fixée à la fusée ou à la jambe de train.

Le dispositif embarqué comprend au moins un ensemble de mesure, ledit ensemble de mesure comprenant deux équipements coopérant entre eux pour réaliser une mesure relative à une distance séparant ledit barreau et une face interne dudit élément creux, un desdits équipements comprenant un organe de mesure appartenant à un capteur agencé à l'intérieur dudit élément creux, un desdits équipements comprenant une paroi en regard dudit capteur, ledit capteur émettant un signal fonction de ladite distance.

Un desdits deux équipements est solidaire du barreau et un desdits deux équipements est solidaire de l'élément creux, ledit dispositif embarqué comportant un système de test, ledit système de test ayant un moyen de déplacement engendrant sur requête un mouvement relatif entre lesdits deux équipements d'un ensemble de mesure, ledit système de test ayant un calculateur relié au capteur, ledit calculateur étant configuré pour traiter ledit signal lorsqu'un dit mouvement relatif est opéré afin de détecter un éventuel dysfonctionnement dudit capteur et pour générer une alerte si un dysfonctionnement est détecté.

Le terme « extrémité » désigne par la suite l'extrémité en tant que telle de l'élément concerné, et/ou un tronçon de l'élément concerné incluant ladite extrémité. Un organe peut par exemple être partagé en deux tronçons d'extrémités.

Ainsi, le train d'atterrissage est muni d'un ou plusieurs ensemble(s) de mesure comprenant un capteur logé à l'intérieur de la fusée, chaque capteur étant apte à évaluer une distance et une déformation de la fusée. A l'aide des mesures effectuées par les capteurs, un calculateur du dispositif embarqué peut déduire de manière usuelle la charge appliquée sur le train d'atterrissage selon un ou plusieurs axes.

L'expression « deux équipements coopérant entre eux » signifie que les deux équipements d'un ensemble de mesure participent à la mesure concernée. Par exemple, l'organe de mesure est un organe optique visant la paroi. Selon un autre exemple, l'organe de mesure comporte un palpeur d'un capteur LVDT, le palpeur étant en contact avec la paroi. L'acronyme LVDT correspond à l'expression anglaise « Linear Variable Differential Transformer ».

De plus, le dispositif embarqué est muni d'un système de test comprenant un moyen de déplacement. L'expression « moyen de déplacement engendrant sur requête un mouvement relatif entre lesdits deux équipements » signifie que si le moyen de déplacement est sollicité alors les deux équipements d'un ensemble de mesure effectuent un mouvement relatif.

Ainsi, l'organe de mesure du capteur et/ou la paroi associée bouge(nt) sous la sollicitation du moyen de déplacement. Au moins un des deux équipements se déplace au moins entre une position nominale à utiliser en dehors des phases de test et une position de test. Le moyen de déplacement peut comprendre un levier ou équivalent manoeuvrable par un individu, un actionneur automatique de type moteur par exemple, ou tout autre moyen permettant d'effectuer la transition entre la position nominale et la position de test.

En raison de ce déplacement relatif entre les deux équipements d'un ensemble de mesure, le signal émis par le capteur varie. Le calculateur scrute ce signal pour le traiter, éventuellement en prenant en compte d'autres paramètres tels que la température extérieure, l'attitude de l'aéronef muni du train d'atterrissage, etc. De plus, le calculateur compare le résultat du traitement à une référence pour déterminer si le dispositif embarqué est en état de fonctionnement.

Par exemple, la variation du signal est traduite en un écart de position comparé à une plage de valeurs théoriques. En effet, un individu peut déterminer à l'aide d'essais la valeur théorique de l'écart à mesurer, et peut l'exprimer sous la forme d'une plage de valeurs. Durant un test, le calculateur détermine l'écart courant mesuré par le capteur et le compare à ladite plage de valeurs.

Ainsi, le système de test peut permettre de tester régulièrement le dispositif embarqué de manière autonome afin de déterminer si le dispositif embarqué est capable de remplir sa fonction avec les performances attendues. Dans la négative, le calculateur peut communiquer avec un dispositif d'alerte pour générer une alerte visuelle, et/ou sonore et/ ou tactile ..

Le test peut en outre être réalisé éventuellement à la demande. Selon des variantes, le test peut être réalisé de manière autonome, par exemple en sollicitant un actionneur motorisé au démarrage de l'aéronef.

Eventuellement, le test peut permettre d'identifier l'état de dégradation du dispositif embarqué, en comparant les mesures effectuées avec ladite référence.

Selon un aspect, si le déplacement d'un desdits équipements s'avère impossible, le système de test permet de déduire la présence d'un dysfonctionnement. Cette impossibilité à obtenir le mouvement relatif voulu peut en effet être provoquée par la présence de corps étrangers, de glace, ou d'une déformation mécanique anormale des parties mécaniques liant l'organe de contact à la structure.

Selon un aspect, la surveillance des signaux émis par les capteurs sur une longue période peut permettre de prendre en compte les phénomènes d'usure des capteurs et/ou des pièces d'interfaces, afin de solliciter ces capteurs dans une plage qui n'est pas susceptible d'être impactée lors de l'usure de ce capteur.

Le train d'atterrissage peut de plus comporter une ou plusieurs des caractéristiques qui suivent.

Selon une première réalisation, la paroi est une portion dudit élément creux, ladite paroi étant munie de ladite face, ledit capteur étant fixé au barreau.

Eventuellement, l'élément creux s'étend d'une première extrémité solidaire de la jambe de train vers une deuxième extrémité qui porte au moins un organe de contact.

De manière alternative, la fusée comporte une barre creuse qui s'étend d'une première zone d'extrémité solidaire de la jambe de train vers une deuxième zone d'extrémité qui porte au moins un organe de contact, ledit élément creux étant fixé à ladite barre creuse et étant agencé à l'intérieur de ladite barre creuse.

Selon cette alternative, l'élément creux est une pièce intermédiaire agencée entre le barreau et la barre portant au moins un organe de contact. Une telle barre est une pièce importante relativement onéreuse. Dès lors, l'utilisation d'un organe intermédiaire formant l'élément creux peut avoir du sens pour éviter d'apporter des modifications à un organe onéreux. L'élément creux peut de plus être remplacé en cas d'usure.

Selon une deuxième réalisation, ladite paroi est une partie du barreau, ledit capteur étant fixé à l'élément creux.

Selon un autre aspect et indépendamment de la réalisation, le capteur peut comprendre un corps et ledit organe de mesure, ledit organe de mesure comprenant une tige sortant dudit corps et portant un palpeur, ledit palpeur étant en contact contre ladite paroi, ladite tige étant libre en translation par rapport au corps selon une première direction allant du capteur vers ladite paroi. Selon une première version du moyen de déplacement, ledit moyen de déplacement est configuré pour que le mouvement relatif soit une translation de l'organe de mesure par rapport à ladite paroi.

Dès lors, le moyen de déplacement est configuré pour déplacer en translation le palpeur par rapport au corps du capteur. Dans la position nominale, le palpeur se situe dans une position prédéfinie par rapport au corps. Par contre et dans la position de test, le palpeur est déplacé par rapport au corps par le moyen de déplacement d'une distance prédéterminée, par exemple en étant rapproché du corps.

Selon une première variante d'une première version, ce moyen de déplacement comporte un doigt mobile en translation dans un plan orthogonal à ladite première direction, ledit doigt coulissant dans une fente dudit corps, ledit capteur comportant dans ledit corps un épaulement qui est solidaire de ladite tige, un organe ressort étant en appui contre ledit épaulement et tendant à éloigner ledit palpeur dudit corps, ledit doigt étant configuré pour exercer un effort sur ledit épaulement afin de rapprocher ledit palpeur dudit corps lors d'une translation dudit doigt selon un premier sens de translation.

Selon un aspect, le moyen de déplacement peut comporter un actionneur dit « actionneur de doigt » par commodité, ledit actionneur de doigt étant relié au doigt pour déplacer en translation ledit doigt.

Un tel actionneur de doigt peut comprendre un levier solidaire du doigt. Ce levier peut être situé en dehors de la fusée pour pouvoir être saisi et déplacé en translation par un opérateur.

De manière alternative ou complémentaire, l'actionneur de doigt peut comprendre un moteur, par exemple mais non exclusivement électrique, apte à déplacer en translation le doigt sur requête. Un tel moteur peut être commandé par un calculateur ou encore par un bouton manoeuvré par un pilote par exemple.

Selon une deuxième variante de la première version, ledit capteur comprenant un corps et ledit organe de mesure, ledit organe de mesure comprenant une tige sortant dudit corps et portant un palpeur, ledit palpeur étant en contact contre ladite paroi, ladite tige étant libre en translation par rapport au corps selon une première direction allant du capteur vers ladite paroi, ledit moyen de déplacement peut comporter un actionneur dit « actionneur de tige » par commodité pour déplacer ladite tige par rapport au corps.

Par exemple, le moyen de déplacement comporte un dispositif d'excitation dans chaque capteur, par exemple un solénoïde, un moteur ultrasonique, etc. Ce dispositif d'excitation peut être piloté par le calculateur auquel sont connectés les capteurs.

Eventuellement, l'actionneur de tige peut comporter une bobine fixée au corps et une zone aimantée de la tige, ladite bobine étant alimentée électriquement sur requête pour commander ledit mouvement relatif.

Selon une deuxième version, la paroi peut présenter circonférentiellement au moins un renfoncement et au moins une bosse pour générer une variation dudit signal lors dudit mouvement relatif.

Le terme « circonférentiellement » fait référence à une courbe fermée limitant une surface de la paroi. Par exemple, la paroi prend la forme d'un cylindre à base sensiblement circulaire, à savoir aux renfoncements et bosses près.

Le moyen de déplacement permet alors de faire tourner le capteur par rapport à la paroi, ou la paroi par rapport au capteur. Par exemple, le capteur est fixé à l'élément creux, et la paroi est une partie du barreau pouvant effectuer une rotation sur elle-même. Selon un autre exemple, la paroi est une partie de l'élément creux, le capteur étant fixé au barreau et pouvant effectuer une rotation sur lui-même.

Indépendamment de cet aspect, les renfoncements et les bosses forment des spécificités géométriques calibrées de la paroi permettant de générer des écarts de mesure calibrés lors du passage de la position nominale à la position de test. En présence de plusieurs capteurs, ces spécificités géométriques peuvent être distribuées de manière différente entre les différents capteurs.

Eventuellement, ledit capteur comprend un corps et ledit organe de mesure, ledit organe de mesure comprenant une tige sortant dudit corps et portant un palpeur, ledit palpeur étant en contact contre ladite paroi, ladite tige étant libre en translation par rapport au corps selon une première direction allant du capteur vers ladite paroi.

Par ailleurs, le moyen de déplacement peut comprendre un actionneur rotatif induisant la circulation dudit palpeur sur ledit au moins un renfoncement et ladite au moins une bosse, ledit mouvement relatif étant un mouvement rotatif, ledit actionneur rotatif entraînant en rotation ledit organe de mesure et/ou ladite paroi d'un ensemble de mesure.

Un actionneur rotatif peut comprendre un levier ou équivalent manoeuvrable par un individu. Ce levier peut être situé en dehors de la fusée pour pouvoir être saisi et déplacé en rotation par un opérateur ou par interaction avec une pièce fixe permettant un déplacement lors de la manoeuvre du train.

L'actionneur rotatif peut aussi être un actionneur automatique de type moteur par exemple, ou tout autre moyen permettant d'engendrer le mouvement relatif requis.

La rotation générée par l'actionneur rotatif permet au palpeur de coulisser en translation par rapport au corps lors du passage d'un renfoncement à une bosse et inversement.

Selon un aspect, le train d'atterrissage pouvant comprendre plusieurs ensembles de mesure, ledit système de test comprend au moins un dit moyen de déplacement engendrant sur requête un mouvement relatif entre les équipements de chaque ensemble de mesure.

Dans ce cas, le système de test peut prévoir de solliciter les capteurs les uns après les autres.

Par exemple, la paroi peut présenter une bosse ou une cavité par capteur, les bosses étant par exemple déphasées.

Deux capteurs peuvent aussi être montés tête bêche selon l'enseignement du document FR 2986322 pour permettre de surveiller la somme évoquée dans ce document.

Par ailleurs, l'invention vise un aéronef qui comporte au moins un train d'atterrissage selon l'invention.

L'invention vise aussi un procédé de détection d'une panne d'un ensemble de mesure d'un train d'atterrissage selon l'invention.

Ce procédé comporte les étapes suivantes :
- émission d'un signal avec ledit capteur lors d'un dit mouvement relatif entre lesdits deux équipements, un desdits deux équipements étant déplacé d'une position nominale vers une position de test,
- traitement dudit signal pour comparaison à une référence,
- émission d'une alerte lorsque ledit signal traité ne correspond pas à ladite référence.

Eventuellement, ladite opération d'émission d'un signal avec ledit capteur lors d'un mouvement relatif entre lesdits deux équipements comporte les opérations suivantes :
∘ émission dudit signal dit « premier signal » avec ledit capteur lorsque lesdits équipements sont dans la position nominale,
∘ déplacement d'un desdits équipements dans la position de test,
∘ émission dudit signal dit « deuxième signal » avec ledit capteur suite au dit déplacement.

Ledit traitement peut comporter une opération de détermination d'un écart entre le premier signal et le deuxième signal.

Ladite comparaison peut comporter une opération de comparaison dudit écart à une plage de valeurs de ladite référence.

Ladite émission d'une alerte peut être réalisée lorsque ledit écart n'appartient à ladite plage de valeurs.

Eventuellement, le premier signal et le deuxième signal sont transformés avant la détermination d'un écart, afin de s'affranchir de l'influence de conditions externes au travers de la prise en compte d'informations annexes telles que la température extérieure, la vitesse de l'appareil, la pression du pneu porté par la fusée, l'état du train d'atterrissage (rétracté, étendu, au sol, en vol, etc), la pression de différentes chambres d'un vérin du train d'atterrissage..

L'invention et ses avantages apparaîtront avec plus de détails dans le cadre de la description qui suit avec des exemples donnés à titre illustratif en référence aux figures annexées qui représentent :
- la figure 1, une vue de face d'un giravion pourvu de trois trains d'atterrissage selon l'invention,
- les figures 2 à 12, des schémas illustrant des trains d'atterrissage selon l'invention, et
- la figure 13, un schéma illustrant un système de mesure de charge.

Les éléments présents dans plusieurs figures distinctes sont affectés d'une seule et même référence.

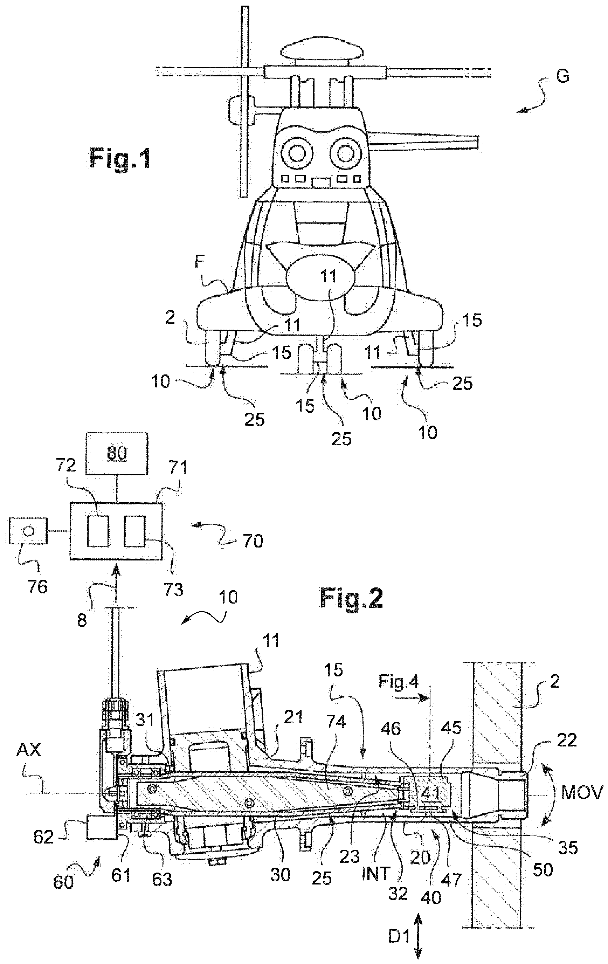

La figure 1 présente une vue d'un aéronef G selon l'invention, par exemple un giravion pourvu d'un fuselage F. Au sol, ce giravion G repose sur deux trains d'atterrissage 10 munis d'un organe de contact avec le sol et sur un train d'atterrissage 10 muni de deux organes de contact avec le sol. Chaque train d'atterrissage 10 est muni d'une jambe de train 11 portant au moins une fusée 15, ladite fusée 15 portant un organe de contact 2.

Les trains d'atterrissage 10 représentés sont du type « train à roue », chaque organe de contact étant donc une roue. Un tel organe de contact peut toutefois prendre la forme d'un patin, d'un ski....

Sous l'action de la masse du giravion G, les fusées 15 des trains d'atterrissage 10 se déforment. En mesurant ces déformations, on peut par exemple en déduire par calcul la charge exercée sur chaque train d'atterrissage, la masse du giravion G ainsi que la position de son centre de gravité.

Ainsi, au moins un train d'atterrissage voire tous les trains d'atterrissage sont du type de l'invention en possédant un dispositif embarqué 25 pour mesurer une telle déformation d'une fusée.

En référence à la figure 2, l'invention vise donc notamment un train d'atterrissage 10 muni d'une jambe de train 11 et d'au moins une fusée 15. La jambe de train peut comprendre une tige, un amortisseur, un vérin..

La fusée 15 s'étend latéralement à partir de la jambe de train jusqu'à un organe de contact.

La fusée 15 est munie d'un élément creux 20. Selon la figure 2, cet élément creux 20 peut s'étendre d'une première extrémité 21 solidaire de la jambe de train vers une deuxième extrémité 22 portant au moins un organe de contact 2.

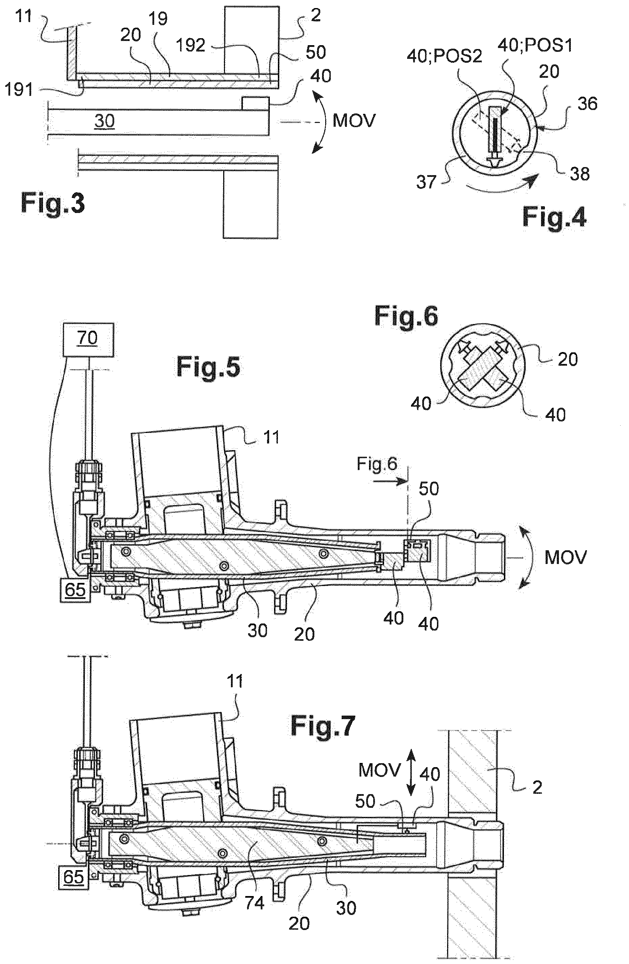

Selon une autre possibilité illustrée sur la figure 3, la fusée comporte ledit élément creux 20 mais aussi une barre creuse 19. La barre creuse s'étend alors d'une première zone d'extrémité 191 solidaire de la jambe de train vers une deuxième zone d'extrémité 192 portant au moins un organe de contact 2. L'élément creux 20 est alors fixé à l'intérieur INT de la barre creuse, et par exemple notamment au niveau de la deuxième zone d'extrémité 192.

Indépendamment de ces possibilités et en référence à la figure 2, sous l'action de la masse de l'aéronef au sol, l'élément creux 20 se déplace et/ou se déforme.

Par suite, le dispositif embarqué 25 comporte un barreau 30.

Ce barreau 30 s'étend à l'intérieur INT de l'élément creux 20 d'une extrémité de fixation 31 vers une extrémité libre 32.

L'extrémité de fixation 31 selon la figure 2 est fixée à la jambe de train 11. Toutefois, cette extrémité de fixation 31 peut être fixée à une portion d'extrémité de la fusée, voire de l'élément creux 20. Par contre, l'extrémité libre 32 du barreau 30 n'est pas solidarisée à l'élément creux ou à la jambe de train, mais demeure au sein de cet élément creux.

De plus, lorsqu'aucun effort n'est exercé sur l'élément creux 20, cet élément creux 20 et le barreau 30 sont par exemple coaxiaux en s'étendant tous deux le long d'un même axe de symétrie AX. Par exemple, le barreau 30 et l'élément creux 20 sont de formes sensiblement cylindriques.

Par contre, lorsque l'aéronef repose sur le sol, la distance séparant l'extrémité libre 32 du barreau 30 et l'élément creux 20 varie comparée à un instant où le train d'atterrissage ne repose pas sur le sol. Cette variation peut être mesurée à l'aide d'au moins un capteur pour évaluer la charge exercée sur le train d'atterrissage au sol.

Ainsi, le dispositif embarqué comporte au moins un capteur 40 apte à mesurer une distance entre ledit barreau 30 et une face interne 23 de l'élément creux 20. Un tel capteur 40 comporte alors un organe de mesure 45 pour réaliser ladite mesure de distance. Le capteur peut prendre diverses formes, en étant par exemple un capteur optique.

Alternativement mais non exclusivement, le capteur 40 peut prendre la forme d'un capteur LVDT. Un capteur LVDT est muni d'un corps 41 portant des bobines de mesure. De plus, le capteur LVDT est muni d'un organe de mesure 45 sortant partiellement du corps 41. Cet organe de mesure 45 peut ainsi posséder une tige 46 portant un palpeur 47. La tige 46 est munie dans le corps d'un noyau ferromagnétique coopérant avec les bobines de mesure. La tige 46 et le palpeur sont libres en translation par rapport au corps selon une première direction D1 allant de l'élément creux 20 et inversement. Le déplacement de la tige 46 en translation par rapport au corps 41 génère une modification du signal électrique émis par les bobines.

Indépendamment de sa nature, le capteur 40 peut de plus comprendre une carte électronique 74, par exemple agencée dans le train d'atterrissage voire dans le barreau. Cette carte électronique 74 est reliée aux bobines de mesure. La carte électronique 74 filtre les données mesurées pour renvoyer une information sous la forme d'un signal, par exemple électrique, à un calculateur 70 via une liaison 8 filaire et/ou non filaire, cette information étant relative à la distance mesurée. Par exemple, cette information prend la forme d'une valeur numérique, ou encore peut prendre la forme d'une tension électrique.

Un tel calculateur 70 peut comprendre par exemple au moins une unité 71 munie d'au moins un processeur 72 et au moins une unité de mémoire 73. Toutefois, le calculateur peut comprendre par exemple au moins un circuit intégré, au moins un système programmable, au moins un circuit logique, ces exemples ne limitant pas la portée donnée à l'expression « calculateur ».

Le calculateur 70 peut déduire de l'information reçue et provenant du capteur une donnée relative à la masse de l'aéronef. L'aéronef peut comprendre un unique calculateur 70, ou plusieurs calculateurs communiquant entre eux.

Par ailleurs, chaque organe de mesure 45 coopère avec une paroi 50 du train d'atterrissage pour évaluer la distance séparant le barreau 30 et la face interne 23.

Ainsi le dispositif embarqué 25 comporte au moins un ensemble de mesure 35 muni de deux équipements. Un de ces deux équipements est un organe de mesure 45 et l'autre équipement est une paroi 50 en regard du capteur 40, et le cas échéant en contact avec un palpeur 47 de l'organe de mesure 45.

Un desdits deux équipements est solidaire du barreau 30 et l'autre équipement est solidaire de l'élément creux 20. Selon une première réalisation, la paroi 50 est ainsi une portion de l'élément creux 20, le capteur 40 étant fixé au barreau 30. Selon une deuxième réalisation, la paroi est une partie du barreau 30, le capteur 40 étant fixé à l'élément creux 20.

Le train d'atterrissage 10 peut comprendre plusieurs ensembles de mesure.

En outre, au moins un ensemble de mesure peut être confiné dans une enceinte étanche disposée dans la fusée 15.

Quelle que soit la réalisation, le dispositif embarqué comporte un système de test 60 afin de pouvoir tester le fonctionnement des capteurs 40.

Ce système de test 60 peut inclure le calculateur 70. De plus, le système de test comporte un moyen de déplacement 61 qui provoque un mouvement relatif MOV entre lesdits équipements de chaque ensemble de mesure, successivement ou conjointement par exemple.

Par exemple, le moyen de déplacement 61 est un moyen manuel manoeuvrable directement par un opérateur ou par interaction avec une pièce fixe permettant un déplacement lors de la manoeuvre du train, ou un moyen automatique commandé par le calculateur.

En outre, le système de test 60 peut comprendre un moyen d'activation 76 qui est relié au calculateur 70 pour initier une procédure de test. Par exemple, le moyen d'activation 76 comporte un bouton, un organe tactile, un organe de commande visuel, un organe de commande vocale... Lorsque le moyen d'activation est sollicité par un opérateur, le calculateur 70 en déduit qu'une procédure de test est en cours. Le calculateur 70 peut aussi être sollicité automatiquement, par exemple au démarrage de l'aéronef.

De plus, un moyen d'alerte 80 peut être relié au calculateur 70.

Dans ce contexte les figures 2 à 12 illustrent diverses manières de réaliser l'invention.

Selon les figures 2 à 7, le moyen de déplacement 61 peut induire un mouvement relatif MOV entre les deux équipements d'un ensemble de mesure qui prend la forme d'un mouvement rotatif.

En référence à la figure 2, le moyen de déplacement 61 inclut alors un actionneur rotatif induisant une rotation du barreau 30. Dès lors, le moyen de déplacement 61 peut comprendre un organe de roulement 63 guidant le barreau 30. Par exemple, l'organe de roulement est interposé entre le barreau et un support solidaire de la jambe de train 11.

L'actionneur rotatif 60 peut être un actionneur manuel 62 ou un actionneur commandé par le calculateur 70.

Selon un autre aspect, chaque capteur 40 peut être fixé au barreau 30 ou à l'élément creux 20.

Dans ce contexte, la figure 2 illustre un exemple de réalisation où l'actionneur rotatif prend la forme d'un levier 62 situé à l'extérieur de la fusée pour pouvoir être saisi par un opérateur ou par interaction avec une pièce fixe permettant un déplacement lors de la manoeuvre du train. Le capteur 40 d'un ensemble de mesure 35 est fixé au barreau 30, la paroi 50 étant une portion de l'élément creux 20.

En référence à la figure 4 la paroi peut alors présenter le long de la circonférence d'une face 36 une succession de renfoncements 37 et de bosses 38.

Selon un autre aspect, le capteur 40 peut être un capteur optique, ou encore un capteur LVDT. Par exemple, le palpeur 47 d'un capteur LVDT est alors en contact contre un renfoncement dans la position nominale et contre une bosse dans la position de test. La distance mesurée par le capteur 40 varie donc entre ces deux positions.

Les figures 5 et 6 illustrent alors un train d'atterrissage 10 du type de la figure 2 muni de deux capteurs 40 fixés au barreau 30. L'actionneur rotatif prend la forme d'un moteur 65 situé à l'extérieur de la fusée 15 et relié à l'actionneur.

En référence à la figure 6, les deux capteurs peuvent être des capteurs LVDT déphasés. Ainsi, un capteur peut être en contact avec un renfoncement dans la position nominale, alors que l'autre capteur est en appui contre une bosse.

La figure 7 illustre un exemple de réalisation où l'actionneur rotatif prend la forme d'un levier 62 situé à l'extérieur de la fusée 15 pour pouvoir être saisi par un opérateur. Le capteur 40 d'un ensemble de mesure est fixé à l'élément creux 20, la paroi 50 étant une portion du barreau 30. De manière alternative. Un moteur est envisageable

Selon un autre aspect, le capteur 40 peut être un capteur LVDT.

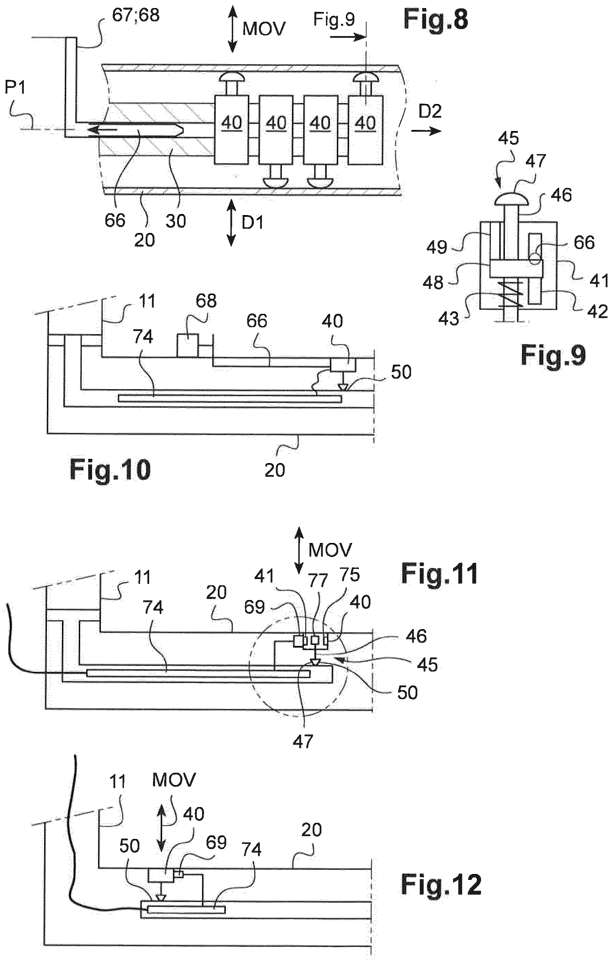

Selon les figures 8 à 12, le moyen de déplacement 61 peut induire un mouvement relatif MOV entre les deux équipements d'un ensemble de mesure qui prend la forme d'un mouvement translatif de l'organe de mesure du capteur 40 par rapport à la paroi 50 selon une première direction D1.

Le moyen de déplacement 61 inclut alors un actionneur translatif induisant une translation de l'organe de mesure. L'actionneur translatif peut être un actionneur manuel ou un actionneur commandé par le calculateur 70.

Selon un autre aspect, chaque capteur peut être fixé au barreau 30 ou à l'élément creux 20.

Dans ce contexte, la figure 7 illustre un exemple de réalisation où le capteur d'un ensemble de mesure est fixé au barreau 30, la paroi 50 étant une portion de l'élément creux 20. Chaque capteur est un capteur LVDT.

L'actionneur translatif comporte un doigt 66 qui est mobile en translation dans un plan P1 orthogonal à la première direction D1. Par exemple, ce doigt peut coulisser dans une gorge longitudinale du barreau 30. De plus, le doigt 66 peut coulisser dans une fente 42 du corps 41 de chaque capteur.

En outre et en référence à la figure 9, chaque capteur 40 comporte un épaulement 48 qui est solidaire d'une tige 46 portant un palpeur 47. Un organe ressort 43 est en appui contre l'épaulement 48 pour tendre à éloigner le palpeur 47 du corps 41, en tendant à plaquer l'épaulement 48 contre une butée 49 du corps 41. Le doigt 66 est ainsi configuré pour exercer un effort sur l'épaulement 48 afin de rapprocher le palpeur 47 du corps 41 lors d'une translation du doigt 66 selon un premier sens de translation D2.

En référence à la figure 8, lorsque le doigt 66 est déplacé selon ce premier sens de translation, tous les palpeurs sont déplacés les uns après les autres dans leurs positions de test. Un déplacement du doigt 66 selon un deuxième sens opposé au premier sens permet aux palpeurs de retourner dans leurs positions nominales.

De plus, l'actionneur translatif peut prendre la forme d'un levier situé à l'extérieur de la fusée 15 pour pouvoir être saisi par un opérateur. Toutefois, un actionneur de doigt motorisé est envisageable.

Selon l'exemple de la figure 10, un tel actionneur de doigt 68 motorisé est employé.

En outre cette figure 10 illustre la possibilité de fixer chaque capteur 40 à l'élément creux 20.

Selon la figure 11, un actionneur de tige 69 est adjoint à un capteur LVDT pour déplacer la tige 46 par rapport au corps 41.

Par exemple, un tel actionneur de tige 69 peut comporter une bobine 75 fixée au corps 41 et une zone aimantée 77 de la tige 46, la bobine 75 étant alimentée électriquement par la carte électronique 74 sur requête du calculateur pour commander ledit mouvement relatif MOV.

La figure 12 illustre la possibilité de fixer le barreau 30 à l'extrémité libre de l'élément creux 20.

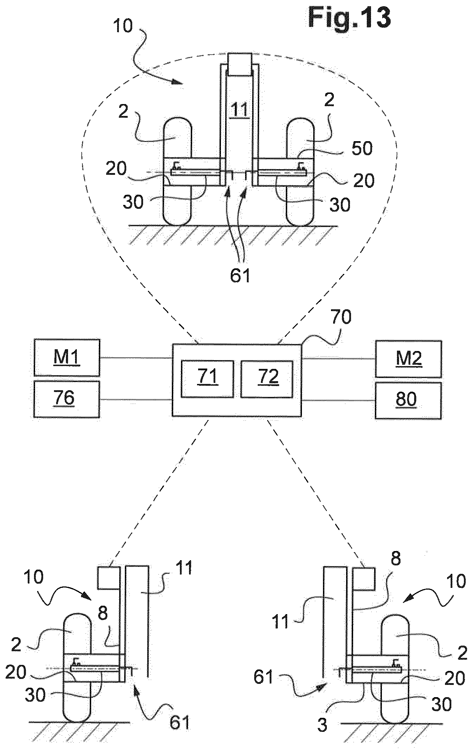

La figure 13 présente un schéma illustrant l'aéronef 1 selon l'invention muni de trois trains d'atterrissage 10. Chaque train d'atterrissage 10 comporte un élément creux 20 dans lequel est inséré un barreau 30. Chaque train d'atterrissage 10 est en outre muni d'au moins un capteur 40 coopérant avec une paroi 50. De plus, chaque train d'atterrissage comporte au moins un système de test 60 muni d'un moyen de déplacement 61.

Chaque capteur 40 communique avec un calculateur 70 via une liaison filaire et/ou non filaire. Selon une première variante, un câble relie chaque capteur directement au calculateur 70. Néanmoins, selon une seconde variante, chaque capteur est relié à un émetteur-récepteur E sans fil, de type hyperfréquence par exemple, agencé sur le train d'atterrissage. Un émetteur-récepteur alimente électriquement un capteur et transmet une information provenant du capteur 40 au calculateur 70.

Dans un mode de fonctionnement nominal, le calculateur détermine la masse totale de l'aéronef ainsi que la position de son centre de gravité par des méthodes usuelles à l'aide des signaux transmis par les capteurs. Eventuellement, le calculateur peut prendre en considération des informations annexes fournies par des moyens de mesure complémentaires M1. Par exemple, des moyens de mesure complémentaires M1 transmettent au calculateur 70 deux signaux secondaires respectivement relatifs aux angles de tangage et de roulis de l'aéronef par rapport au sol. Ces moyens de mesure complémentaires M1 peuvent comprendre notamment deux inclinomètres, qui mesurent respectivement les angles de tangage et de roulis, dédiés spécifiquement à cette application ou tout autre moyen déjà présent sur l'aéronef et remplissant cette fonction.

Pour tester les trains d'atterrissage, un mode de test est engagé. Ce mode de test peut être engagé au démarrage de l'aéronef, ou encore sur requête d'un pilote via un moyen d'activation 76.

Les moyens de déplacement sont alors sollicités soit par un opérateur soit par le calculateur 70 selon la variante.

Dès lors et pour chaque train d'atterrissage 10, chaque moyen de déplacement déplace l'un par rapport à l'autre les deux équipements d'un ensemble de mesure. Le calculateur 70 est alors configuré pour traiter le signal émis par le capteur de cet ensemble de mesure afin de détecter un éventuel dysfonctionnement et pour générer une alerte si un dysfonctionnement est détecté.

En particulier et selon le procédé de l'invention, un équipement mobile d'un ensemble de mesure est placé de fait dans une position nominale POS1 avant le début du test. Le capteur de cet ensemble de mesure émet alors un signal dit premier signal par commodité. Le calculateur peut en déduire une première distance, éventuellement en prenant en considération des informations annexes provenant de systèmes complémentaires M2. De telles systèmes complémentaires peuvent comprendre un capteur de température extérieure, un capteur de température agencé dans une fusée, un capteur mesurant la vitesse de l'aéronef, un capteur mesurant la pression du pneu porté par la fusée, un capteur indiquant l'état du train d'atterrissage (rétracté, étendu, au sol, en vol, etc), un capteur mesurant la pression de différentes chambres d'un vérin du train d'atterrissage...

Lors du test, cet équipement mobile est déplacé par le moyen de déplacement de la position nominale POS1 vers la position de test POS2.

Le calculateur traite le signal reçu pour comparaison à une référence et pour émettre une alerte lorsque ledit signal traité ne correspond pas à ladite référence. Par exemple, un moyen d'alerte 80 est relié au calculateur pour émettre ladite alerte.

Plus précisément, lors du mouvement relatif induit par le moyen de déplacement, le signal émis par le capteur varie. Ce signal prend la forme d'un signal dit deuxième signal par commodité. Le calculateur en déduit une deuxième distance, éventuellement en prenant en considération lesdites informations annexes.

Durant une opération de traitement, le calculateur peut déterminer un écart entre le premier signal et le deuxième signal, à savoir entre la première distance et la deuxième distance.

Le calculateur compare alors cet écart à une plage de valeurs de ladite référence, et émet une alerte si l'écart n'est pas compris dans ladite plage.

A l'issue du test, les équipements sont repositionnés dans la position nominale.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Train d'atterrissage (10) destiné à un aéronef (G), ledit train d'atterrissage (10) étant muni d'une jambe de train (11) portant au moins une fusée (15), ladite fusée (15) étant munie d'un élément creux (20), ledit train d'atterrissage (10) comprenant un dispositif embarqué (25), ledit dispositif embarqué (25) comportant un barreau (30) s'étendant à l'intérieur (INT) dudit élément creux (20) d'une extrémité de fixation (31) vers une extrémité libre (32), ledit dispositif embarqué (25) comprenant au moins un ensemble de mesure (35), ledit ensemble de mesure (35) comprenant deux équipements coopérant entre eux pour réaliser une mesure relative à une distance séparant ledit barreau (30) et une face interne (23) dudit élément creux (20), un desdits équipements comprenant un organe de mesure (45) appartenant à un capteur (40) agencé à l'intérieur dudit élément creux (20), un desdits équipements comprenant une paroi (50) en regard dudit capteur (40), ledit capteur (40) émettant un signal fonction de ladite distance, un desdits deux équipements étant solidaire du barreau (30) et un desdits deux équipements étant solidaire de l'élément creux (20), **caractérisé en ce que** ledit dispositif embarqué (25) comporte un système de test (60), ledit système de test (60) ayant un moyen de déplacement (61) engendrant sur requête un mouvement relatif (MOV) entre lesdits deux équipements d'un ensemble de mesure, ledit système de test ayant un calculateur (70) relié au capteur (40), ledit calculateur (70) étant configuré pour traiter ledit signal lorsqu'un dit mouvement relatif (MOV) est opéré afin de détecter un éventuel dysfonctionnement dudit capteur et pour générer une alerte si un dysfonctionnement est détecté.

2. Train d'atterrissage selon la revendication 1,
**caractérisé en ce que** ladite paroi (50) est une portion dudit élément creux (20), ladite paroi étant munie de ladite face, ledit capteur (40) étant fixé au barreau (30).

3. Train d'atterrissage selon la revendication 2, **caractérisé en ce que** ledit élément creux (20) s'étend d'une première extrémité (21) solidaire de la jambe de train (11) vers une deuxième extrémité (22) qui porte au moins un organe de contact (2).

4. Train d'atterrissage selon la revendication 2,
**caractérisé en ce que** ladite fusée (15) comporte une barre creuse (19) qui s'étend d'une première zone d'extrémité solidaire de la jambe de train (11) vers une deuxième zone d'extrémité qui porte au moins un organe de contact (2), ledit élément creux (20) étant fixé à ladite barre creuse (19) et étant agencé à l'intérieur de ladite barre creuse (19).

5. Train d'atterrissage selon la revendication 1,
**caractérisé en ce que** ladite paroi (50) est une partie dudit barreau (30), ledit capteur (40) étant fixé à l'élément creux (20).

6. Train d'atterrissage selon l'une quelconque des revendications 1 à 5,
**caractérisé en ce que** ledit capteur (40) comprenant un corps (41) et ledit organe de mesure (45), ledit organe de mesure (45) comprenant une tige (46) sortant dudit corps (41) et portant un palpeur (47), ledit palpeur (47) étant en contact contre ladite paroi (50), ladite tige (46) étant libre en translation par rapport au corps (41) selon une première direction (D1) allant du capteur (40) vers ladite paroi (50), ledit mouvement relatif (MOV) est une translation de l'organe de mesure (45) par rapport à ladite paroi (50).

7. Train d'atterrissage selon la revendication 6,
**caractérisé en ce que** ledit moyen de déplacement (61) comporte un doigt (66) mobile en translation dans un plan (P1) orthogonal à ladite première direction (D1), ledit doigt (66) coulissant dans une fente (42) dudit corps (41), ledit capteur (40) comportant dans ledit corps (41) un épaulement (48) qui est solidaire de ladite tige (46), un organe ressort (43) étant en appui contre ledit épaulement (48) et tendant à éloigner ledit palpeur (47) dudit corps (41), ledit doigt (66) étant configuré pour exercer un effort sur ledit épaulement (48) afin de rapprocher ledit palpeur (47) dudit corps (41) lors d'une translation dudit doigt (66) selon un premier sens de translation (D2).

8. Train d'atterrissage selon la revendication 7,
**caractérisé en ce que** ledit moyen de déplacement (61) comporte un actionneur de doigt (68) relié au doigt (66) pour déplacer en translation ledit doigt (66).

9. Train d'atterrissage selon l'une quelconque des revendications 1 à 6,
**caractérisé en ce que**, ledit capteur (40) comprenant un corps (41) et ledit organe de mesure (45), ledit organe de mesure (45) comprenant une tige (46) sortant dudit corps (41) et portant un palpeur (47), ledit palpeur (47) étant en contact contre ladite paroi (50), ladite tige (46) étant libre en translation par rapport au corps (41) selon une première direction (D1) allant du capteur (40) vers ladite paroi (50), ledit moyen de déplacement (61) comporte un actionneur de tige (69) pour déplacer ladite tige (46) par rapport au corps (41).

10. Train d'atterrissage selon la revendication 9, **caractérisé en ce que** ledit actionneur de tige (69) comporte une bobine (75) fixée au corps (41) et une zone aimantée (77) de la tige (46), ladite bobine (75) étant alimentée électriquement sur requête pour commander ledit mouvement relatif (MOV).

11. Train d'atterrissage selon l'une quelconque des revendications 1 à 6,
**caractérisé en ce que** ladite paroi (50) présente circonférentiellement au moins un renfoncement (37) et au moins une bosse (38) pour générer une variation dudit signal lors dudit mouvement relatif (MOV).

12. Train d'atterrissage selon la revendication 11,
**caractérisé en ce que** le moyen de déplacement (61) comprend un actionneur rotatif (62,65) induisant la circulation dudit palpeur (47) sur ledit au moins un renfoncement (37) et ladite au moins une bosse (38), ledit mouvement relatif (MOV) étant un mouvement rotatif, ledit actionneur rotatif entraînant en rotation ledit organe de mesure et/ou ladite paroi d'un ensemble de mesure.

13. Train d'atterrissage selon l'une quelconque des revendications 1 à 12,
**caractérisé en ce que** ledit train d'atterrissage (10) comprenant plusieurs ensembles de mesure, ledit système de test (60) comprend au moins un dit moyen de déplacement (61) engendrant sur requête un mouvement relatif (MOV) entre les équipements de chaque ensemble de mesure (35).

14. Aéronef (G),
**caractérisé en ce que** ledit aéronef (G) comporte au moins un train d'atterrissage (10) selon l'une quelconque des revendications 1 à 13.

15. Procédé de détection d'une panne d'un ensemble de mesure d'un train d'atterrissage (10) selon l'une quelconque des revendications 1 à 13,
**caractérisé en ce que** ledit procédé comporte les étapes suivantes :
- émission d'un signal avec ledit capteur (40) lors d'un dit mouvement relatif (MOV) entre lesdits deux équipements, un desdits deux équipements étant déplacé d'une position nominale (POS1) vers une position de test (POS2),
- traitement dudit signal pour comparaison à une référence,
- émission d'une alerte lorsque ledit signal traité ne correspond pas à ladite référence.

16. Procédé selon la revendication 15,
**caractérisé en ce que** :
- ladite opération d'émission d'un signal avec ledit capteur (40) lors d'un mouvement relatif entre lesdits deux équipements comporte les opérations suivantes :
∘ émission dudit signal dit « premier signal » avec ledit capteur (40) lorsque lesdits équipements sont dans la position nominale (POS1),
∘ déplacement d'un desdits équipements dans la position de test (POS2),
∘ émission dudit signal dit « deuxième signal » avec ledit capteur suite au dit déplacement,
- ledit traitement comporte la détermination d'un écart entre le premier signal et le deuxième signal,
- ladite comparaison comporte une étape de comparaison dudit écart à une plage de valeurs de ladite référence,
- ladite émission étant réalisée lorsque ledit écart n'appartient pas à ladite plage de valeurs.

## Patentansprüche

1. Landegestell (10) für ein Luftfahrzeug (G), wobei das Landegestell (10) mit einem Landegestellbein (11) versehen ist, das mindestens einen Achsschenkel (15) trägt, wobei der Achsschenkel (15) mit einem Hohlelement (20) versehen ist, wobei das Landegestell (10) eine eingebettete Vorrichtung (25) umfasst, wobei die eingebettete Vorrichtung (25) eine Stange (30) aufweist, die sich innerhalb (INT) des Hohlelements (20) von einem Befestigungsende (31) zu einem freien Ende (32) erstreckt, die eingebettete Vorrichtung (25) mindestens eine Messanordnung (35) umfasst, wobei die Messanordnung (35) zwei Einrichtungen umfasst, die miteinander zusammenwirken, um eine Messung in Bezug auf einen Abstand zwischen der Stange (30) und einer inneren Fläche (23) des Hohlelements (20) durchzuführen, wobei eine der Einrichtungen ein Messelement (45) umfasst, das zu einem Sensor (40) gehört, der innerhalb des Hohlelements (20) angeordnet ist, wobei eine der Einrichtungen eine dem Sensor (40) zugewandte Wand (50) umfasst, wobei der Sensor (40) ein Signal entsprechend der Entfernung abgibt, wobei eine der beiden Einrichtungen mit der Stange (30) fest verbunden ist und eine der beiden Einrichtungen mit dem Hohlelement (20) fest verbunden ist,
**dadurch gekennzeichnet, dass** die eingebettete Vorrichtung (25) ein Testsystem (60) umfasst, wobei das Testsystem (60) ein Verschiebungsmittel (61) aufweist, das auf Anforderung eine Relativbewegung (MOV) zwischen den beiden Einrichtungen einer Messanordnung erzeugt, dass das Testsystem einen Rechner (70) aufweist, der mit dem Sensor (40) verbunden ist, und dass der Rechner (70) konfiguriert ist, um das Signal zu verarbeiten, wenn die Relativbewegung (MOV) ausgeführt wird, um eine mögliche Fehlfunktion des Sensors zu erfassen und einen Alarm zu erzeugen, wenn eine Fehlfunktion erkannt wird.

2. Landegestell nach Anspruch 1,
**dadurch gekennzeichnet, dass** die Wand (50) ein Abschnitt des Hohlelements (20) ist, wobei die Wand mit der Fläche versehen ist und der Sensor (40) an der Stange (30) befestigt ist.

3. Landegestell nach Anspruch 2,
**dadurch gekennzeichnet, dass** sich das Hohlelement (20) von einem ersten Ende (21), das mit dem Landegestellbein (11) fest verbunden ist, zu einem zweiten Ende (22) erstreckt, das mindestens ein Kontaktelement (2) trägt.

4. Landegestell nach Anspruch 2,
**dadurch gekennzeichnet, dass** der Achsschenkel eine hohle Stange (19) umfasst, die sich von einer ersten Endzone, die mit dem Landegestellbein (11) fest verbunden ist, zu einer zweiten Endzone erstreckt, die mindestens ein Kontaktelement (2) trägt, wobei das Hohlelement (20) an der hohlen Stange (19) befestigt und innerhalb der hohlen Stange (19) angeordnet ist.

5. Landegestell nach Anspruch 1,
**dadurch gekennzeichnet, dass** die Wand (50) ein Teil der Stange (30) ist und dass der Sensor (40) an dem Hohlelement (20) befestigt ist.

6. Landegestell nach einem der Ansprüche 1 bis 5,
**dadurch gekennzeichnet, dass** der Sensor (40) einen Körper (41) und das Messelement (45) umfasst, dass das Messelement (45) eine Stange (46) umfasst, die sich aus dem Körper (41) heraus erstreckt und einen Fühler (47) trägt, wobei der Fühler (47) in Kontakt mit der Wand (50) steht, dass die Stange (46) in Bezug auf den Körper (41) in einer ersten Richtung (D1) vom Sensor (40) zu der Wand (50) frei verschiebbar ist, und dass die Relativbewegung (MOV) eine Verschiebung des Messelements (45) in Bezug auf die Wand (50) ist.

7. Landegestell nach Anspruch 6,
**dadurch gekennzeichnet, dass** das Verschiebungsmittel (61) einen Finger (66) umfasst, der in einer Ebene (P1) orthogonal zu der ersten Richtung (D1) verschiebbar ist, dass der Finger (66) in einem Schlitz (42) des Körpers (41) gleitet, dass der Sensor (40) in dem Körper (41) eine Schulter (48) umfasst, die mit der Stange (46) fest verbunden ist, dass ein Federelement (43) mit der Schulter (48) in Kontakt steht und dazu neigt, den Fühler (47) von dem Körper (41) weg zu bewegen, und dass der Finger (66) konfiguriert ist, um eine Kraft auf die Schulter (48) auszuüben, um den Fühler (47) während einer Verschiebung des Fingers (66) in einer ersten Verschieberichtung (D2) näher an den Körper (41) zu bewegen.

8. Landegestell nach Anspruch 7,
**dadurch gekennzeichnet, dass** das Verschiebungsmittel (61) ein Fingerstellglied (68) umfasst, das mit dem Finger (66) verbunden ist, um den Finger (66) zu verschieben.

9. Landegestell nach einem der Ansprüche 1 bis 6,
**dadurch gekennzeichnet, dass** der Sensor (40) einen Körper (41) und das Messelement (45) umfasst, dass das Messelement (45) eine Stange (46) umfasst, die sich aus dem Körper (41) heraus erstreckt und einen Fühler (47) trägt, wobei der Fühler (47) in Kontakt mit der Wand (50) steht, dass die Stange (46) in Bezug auf den Körper (41) in einer ersten Richtung (D1) vom Sensor (40) zur Wand (50) frei verschiebbar ist, und dass das Verschiebungsmittel (61) ein Stangenstellglied (69) zum Bewegen der Stange (46) in Bezug auf den Körper (41) umfasst.

10. Landegestell nach Anspruch 9,
**dadurch gekennzeichnet, dass** das Stangenstellglied (69) eine am Körper (41) befestigte Spule (75) und einen Magnetbereich (77) der Stange (46) aufweist, und dass die Spule (75) auf Anforderung elektrisch angetrieben wird, um die Relativbewegung (MOV) zu steuern.

11. Landegestell nach einem der Ansprüche 1 bis 6,
**dadurch gekennzeichnet, dass** die Wand (50) in Umfangsrichtung mindestens eine Aussparung (37) und mindestens einen Vorsprung (38) zum Erzeugen einer Änderung des Signals während der Relativbewegung (MOV) aufweist.

12. Landegestell nach Anspruch 11,
**dadurch gekennzeichnet, dass** das Verschiebungsmittel (61) ein Drehstellglied (62, 65) umfasst, das den Umlauf des Fühlers (47) über die mindestens eine Aussparung (37) und den mindestens einen Vorsprung (38) induziert, dass die Relativbewegung (MOV) eine Drehbewegung ist, und dass das Drehstellglied eine Drehung des Messelements und/oder der Wand einer Messanordnung bewirkt.

13. Landegestell nach einem der Ansprüche 1 bis 12,
**dadurch gekennzeichnet, dass** das Landegestell (10) mehrere Messanordnungen umfasst, und dass das Testsystem (60) mindestens eines der Verschiebungsmittel (61) umfasst, das auf Anforderung eine Relativbewegung (MOV) zwischen den Geräten jeder Messanordnung (35) erzeugt.

14. Luftfahrzeug (G),
**dadurch gekennzeichnet, dass** das Luftfahrzeug (G) mindestens ein Landegestell (10) nach einem der Ansprüche 1 bis 13 aufweist.

15. Verfahren zum Erfassen einer Störung einer Messanordnung eines Landegestells (10) nach einem der Ansprüche 1 bis 13,
**dadurch gekennzeichnet, dass** das Verfahren die folgenden Schritte umfasst:
- Aussenden eines Signals mit dem Sensor (40) während einer Relativbewegung (MOV) zwischen den beiden Einrichtungen, wobei eine der beiden Einrichtungen von einer Sollposition (POS1) zu einer Prüfposition (POS2) bewegt wird,
- Verarbeiten des Signals zum Vergleich mit einer Referenz,
- Auslösen einer Warnung, wenn das verarbeitete Signal nicht mit der Referenz übereinstimmt.

16. Verfahren nach Anspruch 15, **dadurch gekennzeichnet, dass**:
- der Vorgang des Aussendens eines Signals mit dem Sensor (40) während einer Relativbewegung zwischen den beiden Einrichtungen die folgenden Operationen beinhaltet:
• Aussenden des als "erstes Signal" bezeichneten Signals mit dem Sensor (40), wenn sich die Vorrichtung in der Sollposition (POS1) befindet,
• Verschieben einer der Einrichtungen in die Prüfposition (POS2),
• Aussenden des als "zweites Signal" bezeichneten Signals mit dem Sensor nach der Verschiebung,
- die Verarbeitung das Bestimmen einer Abweichung zwischen dem ersten Signal und dem zweiten Signal umfasst,
- der Vergleich einen Schritt des Vergleichens der Abweichung mit einem Wertebereich der Referenz umfasst,
- wobei das Aussenden durchgeführt wird, wenn die Abweichung nicht zu dem Wertebereich gehört.

## Claims

1. Landing gear (10) for an aircraft (G), said landing gear (10) having a landing gear leg (11) carrying at least one stub (15), said stub (15) being provided with a hollow element (20), said landing gear (10) comprising an onboard device (25), said onboard device (25) including a bar (30) extending in the interior (INT) of said hollow element (20) from a fixed end (31) to a free end (32), said onboard device (25) comprising at least one measurement unit (35), said measurement unit (35) comprising two pieces of equipment cooperating with each other to take a measurement relating to a distance between said bar (30) and an inside face (23) of said hollow element (20), one of said pieces of equipment comprising a measurement member (45) forming part of a sensor (40) arranged inside said hollow element (20), one of said pieces of equipment comprising a wall (50) facing said sensor (40), said sensor (40) issuing a signal that is a function of said distance, one of said pieces of equipment being secured to the bar (30) and one of said pieces of equipment being secured to the hollow element (20),
**characterised in that** said onboard device (25) includes a test system (60), said test system (60) having movement means (61) operating on request to impart a relative movement (MOV) between said two pieces of equipment of a measurement unit, said test system having a calculator (70) connected to the sensor (40), said calculator (70) being configured to process said signal when a said relative movement (MOV) is imparted in order to detect any potential malfunction of said sensor and in order to generate an alert if a malfunction is detected.

2. Landing gear according to claim 1,
**characterised in that** said wall (50) is a portion of said hollow element (20), said wall being provided with said face, and said sensor (40) being fixed to the bar (30).

3. Landing gear according to claim 2,
**characterised in that** said hollow element (20) extends from a first end (21) secured to the landing gear leg (11) to a second end (22) that carries at least one contact member (2).

4. Landing gear according to claim 2,
**characterised in that** said stub (15) includes a hollow strut (19) that extends from a first end zone secured to the landing gear leg (11) to a second end zone that carries at least one contact member (2), said hollow element (20) being fixed to said hollow strut (19) and being arranged inside said hollow strut (19).

5. Landing gear according to claim 1,
**characterised in that** said wall (50) is a portion of said bar (30), said sensor (40) being fixed to the hollow element (20).

6. Landing gear according to any one of claims 1 to 5,
**characterised in that** said sensor (40) comprises a body (41) and said measurement member (45), said measurement member (45) comprising a rod (46) extending from said body (41) and carrying a feeler (47), said feeler (47) being in contact with said wall (50), said rod (46) being free to move in translation relative to the body (41) along a first direction (D1) going from the sensor (40) towards said wall (50), and said relative movement (MOV) is a movement of the measurement member (45) in translation relative to said wall (50).

7. Landing gear according to claim 6,
**characterised in that** the movement means (61) include a finger (66) that is movable in translation in a plane (P1) orthogonal to the first direction (D1), said finger (66) sliding in a slot (42) in said body (41), said sensor (40) including in said body (41) a shoulder (48) that is secured to said rod (46), a spring member (43) bearing against said shoulder (48) and tending to move said feeler (47) away from said body (41), said finger (66) being configured to exert a force on said shoulder (48) so as to cause said feeler (47) to approach said body (41) during a movement in translation of said finger (66) along a first direction of translation (D2).

8. Landing gear according to claim 7,
**characterised in that** the movement means (61) include a finger actuator (68) connected to the finger (66) to move said finger (66) in translation.

9. Landing gear according to any one of claims 1 to 6,
**characterised in that** said sensor (40) comprises a body (41) and said measurement member (45), said measurement member (45) comprising a rod (46) extending from said body (41) and carrying a feeler (47), said feeler (47) being in contact with said wall (50), said rod (46) being free to move in translation relative to the (41) body in a first direction (D1) going from the sensor (40) towards said wall (50), and said movement means (61) include a rod actuator (69) for moving said rod (46) relative to the body (41).

10. Landing gear according to claim 9,
**characterised in that** the rod actuator (69) includes a coil (75) fixed to the body (41) and a magnetized zone (77) of the rod (46), said coil (75) being electrically powered on request in order to impart said relative movement (MOV).

11. Landing gear according to any one of claims 1 to 6,
**characterised in that** said wall (50) presents at least one setback (37) and at least one bulge (38) circumferentially in order to generate a variation in said signal during said relative movement (MOV).

12. Landing gear according to claim 11,
**characterised in that** the movement means (61) comprise a rotary actuator (62, 65) causing said feeler (47) to travel over said at least one setback (37) and said at least one bulge (38), said relative movement (MOV) being a rotary movement, said rotary actuator driving said measurement member and/or said wall of a measurement unit in rotation.

13. Landing gear according to any one of claims 1 to 12,
**characterised in that** said landing gear (10) comprises a plurality of measurement units, said test system (60) comprises at least one said movement means (61) for imparting a relative movement (MOV) on request between the pieces of equipment of each measurement unit (35).

14. Aircraft (G),
**characterised in that** said aircraft (G) includes at least one landing gear (10) according to any one of claims 1 to 13.

15. Method of detecting a failure of a measurement unit of a landing gear (10) according to any one of claims 1 to 13,
**characterised in that** said method includes the following steps:
- issuing a signal with said sensor (40) during a said relative movement (MOV) between said two pieces of equipment, one of said two pieces of equipment being moved from a nominal position (POS1) to a test position (POS2),
- processing said signal for comparison with a reference;
- issuing an alert when said processed signal does not correspond to said reference.

16. Method according to claim 15, **characterised in that**:
- said operation of issuing a signal with said sensor (40) during a relative movement between said two pieces of equipment includes the following operations:
∘ issuing said signal, referred to as a "first signal", with said sensor (40) when said pieces of equipment are in the nominal position (POS1),
∘ moving one of the pieces of equipment into the test position (POS2),
∘ issuing said signal, referred to as a "second signal", with said sensor after said movement,
- said processing includes determining a difference between the first signal and the second signal;
- said comparison includes a step of comparing said difference with a range of values of said reference;
- said issuing being performed when the difference does not lie in said range of values.
